# EUROPEAN PATENT APPLICATION

(11) **EP 1 767 317 A1**
(43) Date of publication of application: **28.03.2007**
(21) Application number: 05749163.1
(22) Date of filing: 10.05.2005
(51) Int. Cl.: B25J 1/02, B25J 19/04, B63B 59/08

(54) **EXTENDIBLE OPERATING AND INSPECTION ARM**

(30) Priority: 10.05.2004 ES 200401117
(71) Applicant: Praesentis, S.L., 08290 Cerdanyola del Valles (Barcelona) (ES)
(72) Inventor: TEIXIDOR CALSINA, Jordi Centre d'Empr. Noves Tech., 08290 Cerdanyola del Valles (Barcelona) (ES)
(74) Representative: Carpintero Lopez, Francisco
(86) International application number: PCT/ES2005/000253
(87) International publication number: WO 2005/108018

(57) **Abstract**

Extensible inspection and operation arm that allows viewing the state of surfaces of elements located in areas of difficult access, even underwater, which in turn is also able to perform certain corrective actions on them such as cleaning, painting or minor repairs. The invention is constituted by an upper manoeuvring arm (1) that includes a screen (3) for viewing the images captured by a camera (4) installed in the lower actuation arm (2), which also incorporates an object holder (11) to which are coupled various auxiliary devices such as brushes, paintbrushes or the like. Both arms (1, 2) are hinged to each other and are telescopically extensible, allowing the camera (4) and the object holder (11) to reach points of difficult access.

## Description

### OBJECT OF THE INVENTION

The present invention relates to an extensible arm for inspection and operation that allows viewing on a screen in real time of the state of items or points located in areas that are hard to reach, even underwater, incorporating for this a camera on its lower end.

Additionally, the device allows incorporating various accessories, such as clips or brushes, which allow performing corrective actions in addition to those of inspection.

### BACKGROUND OF THE INVENTION

The need to inspect areas with complicated access has given rise to the appearance of several devices developed for this purpose, particularly intended for underwater applications. These systems appear as an improvement of traditional underwater cameras or more recent underwater robots, requiring a specialist to handle them underwater, which at times may imply a risk.

These devices, used mainly for professional purposes in port areas, allow quick and accurate inspections of submerged uncontrolled or unidentified objects, controlling the state of ship structures and port constructions and even constitute a valuable instrument for scientific studies, simplifying the monitoring of black tides, inspections of water conditions and the study of the evolution of aquatic flora and fauna.

An observation system of this type is described in US document 2001/0048468, relating to a "Surface video observation system" that basically consists of an underwater infrared camera coupled to the end of an arm, the upper end of which is provided with a screen that allows viewing the underwater animals and plants adjacent to the ship.

The constitution of the arm of this device, which does not allow its extension or articulation, greatly limits the utility of this observation system. In addition, the impossibility of performing repairs with it limits its possible applications, as it is only valid for inspection tasks.

On another hand, the "Device for cleaning bottom of a boat" described in US document 4,060,047 relates to a device for cleaning the submerged bottom of a boat and consists of a bar constituted by a number of hinged rods disposed in such a manner that the assembly is adapted to the outline of the boat's hull and allows reaching its bottom. On its lower end the bar incorporates a brush and scrapers that allow cleaning the boat.

The hinged constitution of this device implies an advantage over the aforementioned underwater observation system, but the absence of means allowing observation and control of the actions performed constitutes a great drawback, as it limits its possible applications.

In view of the documents cited above, it is considered necessary to develop a device that allows viewing items placed in hard-to-reach areas, such as at a certain depth underwater or underground. It is also desirable that the device be valid not only for inspection purposes but also for corrective or repair tasks, such as cleaning, painting or gripping small objects.

The possibility that the device be configured in a manner allowing certain manoeuvrability considerably increases its fields of application, as does its telescoping nature, which allows access to points located at different distances from the operator.

In addition, it is desirable that the inspection and operation device have a degree of autonomy in its operation, allowing its use where it is not possible to connect to the power grid, thereby increasing its safety when used in underwater applications or in humid environments.

### DESCRIPTION OF THE INVENTION

The object of this invention is to develop an extensible arm for inspection and operation that allows viewing points or objects placed in hard-to-reach areas, even under water.

The extensible inspection and operation arm disclosed, in addition to performing observation and inspection tasks, must be able to carry out small corrective or repare tasks such as cleaning, painting or gripping objects.

The extensible inspection and operation arm object of this invention is constituted by two arms joined through an adjustable hinged elbow. The actuation arm, the one farthest from the operator, incorporates on its free end a camera and an object holder, while the manoeuvring arm, as its name suggests, has elements for supporting, gripping and manoeuvring and includes the screen on which are displayed the images captured by the camera.

Both the actuation arm and the manoeuvring arm are constituted by hollow tubular elements that allow passage inside them of the cables that actuate the various mechanisms and transmit the video signal from the camera to the screen. The manoeuvring arm, which is constituted by two segments of different diameters, allows adjusting its length in a telescopic manner that provides access to points located nearer or farther from the operator's position. In addition, the manoeuvrability of the device is increased by a hinged union of the two arms that are placed in contact through an elbow with an adjustable angle controlled by mechanical or electrical means. With the same end, the device incorporates the means needed to turn the camera on several axes. The combination of these characteristics allows using the extensible inspection and operation arm to access points placed in areas of difficult or even impossible access for other systems of this type.

The object holder, which as mentioned above is placed on the free end of the actuation arm, is installed on the top part of the camera support. This proximity to the image capturer ensures a correct display and monitoring in the screen of the operations carried out with the accessories or auxiliary elements attached to it, such as cleaning brushes, paint brushes, clips, cutting elements or airbrushes. The actions that these accessories allow performing range from cleaning or painting to minor repairs.

The applications for which this extensible inspection and operation arm was conceived, normally in areas of difficult access, require a degree of autonomy and portability of the device. The autonomy is achieved by an electric battery incorporated in the screen, which provides independence from the power grid and used in any location, increasing safety in underwater applications. To facilitate the transport of this inspection and operation arm, it is possible to separate the screen and it incorporates an attachment clip in the actuation arm. The purpose of this clip is not only to keep the two arms joined during transport, thereby increasing the ease of transport, but also to support or attach the device on a railing or similar object while it is used. The attachment clip can also be attached to a harness that the user may wear, thereby distributing its weight and increasing its ease of use.

### DESCRIPTION OF THE DRAWINGS

To complete the description being made and in order to aid a better understanding of the characteristics of the invention, according to a preferred embodiment, a single drawing is accompanied as an integral part of this description where for purposes of illustration only and in a non-limiting sense the following is shown:

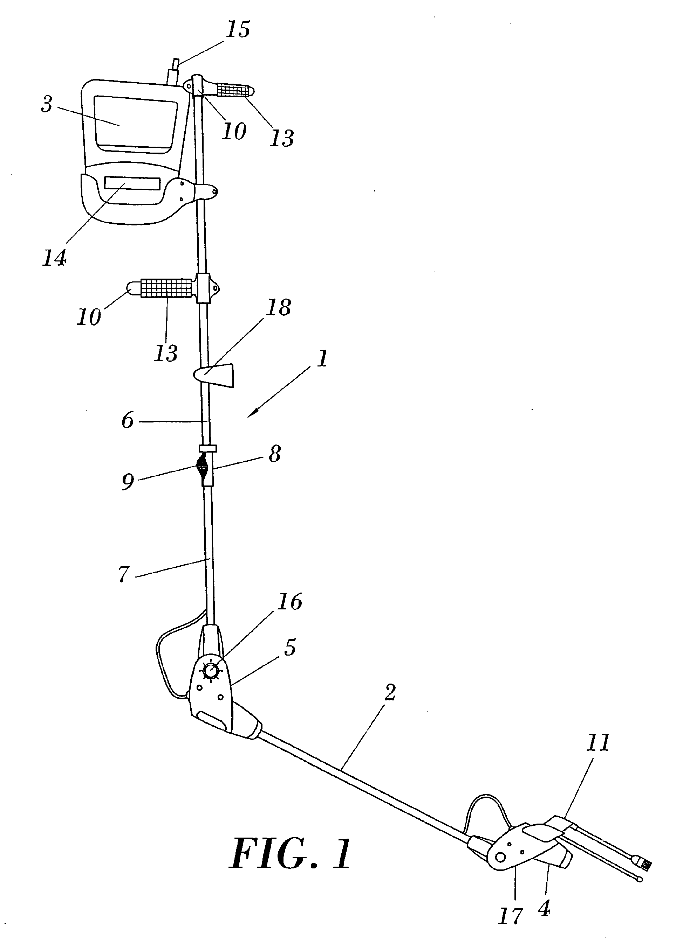

Figure 1 shows a view of the extensible inspection and operation arm in its open position for use.

### PREFERRED EMBODIMENT OF THE INVENTION

In view of the figure, an example of embodiment of the invention is shown that consists of an extensible inspection and operation arm constituted by a manoeuvring arm (1) and an actuation arm (2) joined by an adjustable hinged elbow (5).

The main elements of the extensible inspection and operation arm are the camera (4), placed on the bottom end of the actuation arm (2), and the screen (3) installed on the opposite end, that is, on the top end of the manoeuvring arm (1). In addition, the inspection device incorporates an object holder (11) on top of the support of the camera (4).

The manoeuvring arm (1) is in turn configured by two hollow tubular elements of different diameters. The upper tube (6) has an inner diameter such that it can house the lower tube (7) inside it. This difference in diameters allows a telescopic regulation of the length of the manoeuvring arm (1), for which it uses the length regulator (8) located in the bottom end of the upper tube (6). The actuator (9) incorporated in said length regulator (8) acts as a stop such that, when it is not actuated, the lower tube (7) slides freely inside the upper tube (6), gradually increasing the length of the manoeuvring arm (1). After selecting the desired length of said arm, according to the position of the point to be accessed by the extensible inspection and operation arm, the actuator (9) is activated, thereby preventing the sliding of the bottom tube (7) and setting the length of the manoeuvring arm (1). The actuator (9) may be activated manually or electrically, in which case the length of the manoeuvring arm (1) could be changed after it is submerged and in operation.

In a possible embodiment of the invention, the actuation arm (2) can also be telescopically extensible, in which case it will comprise the same elements as discussed for the manoeuvring arm (1). Both the manoeuvring arm (1) and the actuation arm (2) are constituted by one or several tubular elements, this tubular configuration allowing passage of the cables needed to actuate and control the electrical devices.

The upper part of the manoeuvring arm (1) includes asimetrical grips (10) which in a possible embodiment of the invention can include control elements for both the camera (4) (zoom, focus, orientation, etc.) and the object-holder (11), which can be driven electrically. In addition, said control elements allow adjusting the length of the manoeuvring arm (1) and the actuation arm (2) when the actuators (9) can be actuated electrically. The asymmetrical grips (10) have an ergonomic coating (13) to improve their grip and increases the ease of use of the extensible inspection and operation arm.

The screen (3) is placed on the free end of the manoeuvring arm (1), next to the asymmetrical grips (10), and is provided with means for a simple orientation in order to adjust the angle of vision. To increase comfort and safety when transporting the device, the screen can be easily separated from the manoeuvring arm (1) to which it is joined, thereby preventing its possible damage during transport. The screen (3) incorporates an electric battery (14) that gives the device a great autonomy, allowing its use in locations far from the power grid such as in ports, which in principle is where this invention will find its main application. In addition, this independence from the power grid increases the safety of the device, reducing the possibility of short-circuits due to immersion of apparatuses connected to the power grid in water.

In a possible embodiment of the invention, the extensible inspection and operation arm can transmit the images captured by the camera (4) to a remote location. This wireless, real-time signal transmission to a control room requires incorporating a transmitter (15) located near the screen (3).

In another possible embodiment of the invention, which does not consider the incorporation of control elements, the object holder (11) is actuated by controls placed on the outer part of the support of the screen (3) and the electric battery (14).

The actuation arm (2) which, as the manoeuvring arm (1), consists of one or several tubular elements, is joined to the latter through the hinged elbow (5), which allows defining the working position, adapting to the surface to be inspected or on which an action will be performed. To facilitate setting the desired angle between the manoeuvring arm (1) and the actuation arm (2), a graded scale (16) is provided in said elbow. The hinged elbow (5) can be regulated mechanically or electrically. In the simplest embodiment of the invention, in which the regulation is mechanical, it is necessary to place the arms (1) and (2) in the desired working angle before submerging or using the device, using toothed gears or any other mechanism. If electrical means actuated from the control elements are used, it is possible to change the angle formed by the two arms even when the device is submerged and in operation.

On the free end of the actuation arm (2) is placed the camera (4), with a high resolution and sensitivity and which can be of different types: B/W, colour, infrared or even underwater. The support (17) on which the camera is placed allows orientation in any direction and has a graded scale that allows viewing the desired angle, changed manually or electrically in another embodiment about one or two rotation shafts using the control elements incorporated in the asymmetrical grips (10) in a possible embodiment of the invention.

The aforementioned object holder (11) is placed on the top of the support (17) of the camera (4) and its function is to allow coupling to the camera of any manually or electrically actuated auxiliary device, such as cleaning brushes, paint brushes, clips, cutting elements or airbrushes, among others. This element and the complements coupled to it are designed such for a simple and quick assembly and removal without requiring the use of any tools.

To facilitate the transport of the extensible inspection and operation arm object of this invention a clip (18) is incorporated for attaching the two arms to each other. This clip is placed in the manoeuvring arm (1) and allows joining the arms (1) and (2) to each other, the hinged elbow (5) placed at a 0° angle to facilitate transportation and storage of the device, greatly reducing the space occupied. In addition, said clip (18) allows resting the extensible inspection and operation arm on the rail of a ship or the like, or to a support harness that the user may wear around the neck or on the belt.

## Claims

1. Extensible inspection and operation arm for viewing the state or surfaces or elements located in areas of difficult access, even underwater, of the type constituted by an upper manoeuvring arm (1) and a lower actuation arm (2), both telescopic, joined through a hinged elbow (5) that allows changing the angle formed by the two arms, and a screen (3) that displays the images captured by a camera (4) installed on the free end of the actuation arm (2), **characterised in that** it is provided with:
- asymmetrical grips (10) for holding it;
- an object holder (11) on the free end of the actuation arm (2) that allows performing various corrective actions on the elements or surfaces viewed by coupling to it auxiliary devices such as brushes, paintbrushes, clips or the like;
- a length regulator (8) placed on the bottom end of the upper tube (6) incorporating an actuator (9) that acts as a stop to prevent the sliding and rotation of the lower tube (7) inside the upper tube (6) after the desired length has been set;
- and an attachment clip (18) in the manoeuvring arm (1) that allows joining the arms (1) and (2) to each other, the hinged elbow (5) placed at a 0° angle to facilitate transportation and storage of the device while allowing to rest it against a rail or support while it is used, releasing the user of its weight.

2. Extensible inspection and operation arm according to claim 1, **characterised in that** the asymmetrical grips (10) incorporate control elements (12) on the various electrical actuations of the device.

3. Extensible inspection and operation arm according to claims 1 and 2 **characterised in that** the actuator (9) of the length regulator (8) is actuated electrically from the control element.

4. Extensible inspection and operation arm according to claims 1 and 2 **characterised in that** the object holder (11) is actuated electrically from the control element.

5. Extensible inspection and operation arm according to claims 1 and 2 **characterised in that** the hinged elbow (5) is actuated electrically from the control element.

6. Extensible inspection and operation arm according to claims 1 and 2 **characterised in that** the camera (4) is installed on a support (17) that is actuated electrically from the control element and allows its rotation on one or two axes.

7. Extensible inspection and operation arm according to claim 1 **characterised in that** it includes a transmitter (15) for wireless transmission of the video signal captured by the camera (4), allowing to view it at a remote location.

8. Extensible inspection and operation arm according to claim 1, **characterised in that** the screen (3) can be separated from the manoeuvring arm (1) and incorporates an electrical battery (14) that provides autonomy to the device from the electrical power grid.

9. Extensible inspection and operation arm according to claim 1, **characterised in that** the support of the screen (3) and the electrical battery (14) incorporates controls for the object holder (11).
